Europäisches Patentamt

European Patent Office

Office européen des brevets

(11) Veröffentlichungsnummer: **0 463 220 A1**

## EUROPÄISCHE PATENTANMELDUNG

(21) Anmeldenummer: **90112422.2**

(51) Int. Cl.$^5$: **G02B 15/02**

(22) Anmeldetag: **29.06.90**

(43) Veröffentlichungstag der Anmeldung:
**02.01.92 Patentblatt 92/01**

(84) Benannte Vertragsstaaten:
**CH DE FR GB IT LI NL SE**

(71) Anmelder: **Menke, Josef-Ferdinand, Dipl.-Ing.**

Fördestrasse 27
**W-2392 Glücksburg(DE)**

(72) Erfinder: **Menke, Josef-Ferdinand, Dipl.-Ing.**
Fördestrasse 27
**W-2392 Glücksburg(DE)**

(54) Optische Anordnung von Linsen zur Erzeugung von drei Bildwinkeln durch Drehung eines Linsensystems.

(57) Es wird ein optisches System beschrieben, das mittels einer Grundoptik und eines vorgesetzten Afokal-Systems zur Erzeugung von drei Bildwinkeln geeignet ist. Das wird dadurch möglich, daß das Afokal-System vorwärts wie rückwärts betrieben wird, also in 0° und 180° zur optischen Achse und auch ganz aus dem Strahlengang entfernt werden kann. Der Vorteil gegenüber bekannten Systemen liegt darin, daß für eine Änderung des Bildwinkels um den Faktor n lediglich ein Übersetzungsverhältnis des Afokal-Systems von $\sqrt{n}$ notwendig ist. Bei gleicher optischer Leistung läßt sich so der konstruktive Aufwand erheblich reduzieren oder aber eine höhere optische Leistung bei gleichem Konstruktionsaufwand erzielen.

Fig. 1

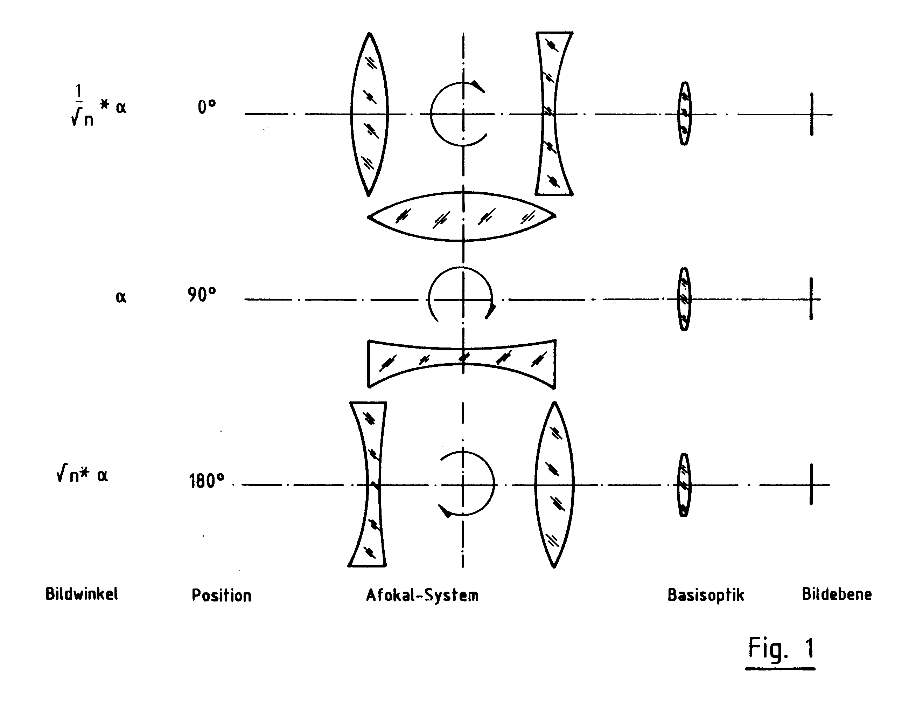

Die Erfindung betrifft eine optische Anordnung von Linsen zur Erzeugung von drei Bildwinkeln mit Hilfe eines um 0˚, 90˚ und 180˚ drehbaren afokalen, optischen Systems, das vor einer Grundoptik angeordnet ist (siehe Fig. 1).

Es ist Stand der Technik, zur Veränderung des Bildwinkels bei Kameras jeder Art Zoom-Objektive einzusetzen , die es erlauben, den Bildwinkel kontinuierlich zu verändern. Solche optischen Systeme mit variablem Bildwinkel besitzen aber einige entscheidende Nachteile. Zur Korrektur der Bildfehler bei allen Bildwinkeln sind sehr viele Linsen notwendig, wodurch die Transparenz des Systems erheblich reduziert wird. Insbesondere für Infrarotoptiken sind solche Systeme deshalb ungeeignet. Bei der Konstruktion hochgeöffneter Zoom-Objektive potenzieren sich die Probleme.

Es ist auch Stand der Technik, die genannten Probleme dadurch zu beheben, daß man sich auf zwei Bildwinkel beschränkt, indem man vor eine Grundoptik wahlweise ein afokales Linsensystem schwenkt. So ist es möglich, mit wenigen Linsen gut korrigierte, optische Systeme mit zwei Bildwinkeln zu konstruieren. Der Unterschied der Bildwinkel entspricht in diesem Fall gerade dem Vergrößerungsfaktor, respektive Verkleinerungsfaktor des vorschaltbaren Afokal-Systems.

Der vorliegenden Erfindung liegt die Aufgabe zugrunde, mit einer Grundoptik und einem Afokal-System, das in 0˚, 90˚ und 180˚ Stellung zur optischen Achse benutzt wird (siehe Bild 1), drei Bildwinkel zu realisieren.

Der Vorteil gegenüber bekannten Systemen mit zwei Bildwinkeln liegt weniger in der Einführung eines dritten Bildwinkels, als vielmehr in der Reduzierung des Vergrößerungsfaktors für das Afokal-System.

In bekannten Anordnungen, ein Afokal-System vor einer Grundoptik, ist für eine Veränderung des Bildwinkels um den Faktor n ein Afokal-System mit dem Vergrößerungs- oder Verkleinerungsfaktor n erforderlich. Wird das Afokal-System aber vorwärts wie rückwärts benutzt, also in 0˚ und 180˚ Stellung vor der Grundoptik, so wird für die Afokal-Optik nur ein Vergrößerungs-/Verkleinerungsverhältnis von $\sqrt{n}$ benötigt, um insgesamt einen Bildwinkelunterschied um den Faktor n zu erzeugen. Dies ist daraus ersichtlich, daß in der 0˚ Stellung z. B. eine Vergrößerung um den Faktor $\sqrt{n}$ auftritt und in der 180˚ Stellung gerade eine Verkleinerung um den Faktor $\sqrt{n}$, insgesamt ergibt sich so eine Änderung des Bildwinkels um **n = $\sqrt{n} \cdot \sqrt{n}$.**

Der konstruktive Aufwand für eine Afokal-Optik wird aber erheblich reduziert, wenn das Übersetzungsverhältnis nicht n sondern $\sqrt{n}$ beträgt. Das schlägt sich entweder in einer reduzierten Linsenzahl nieder (von besonderer Wichtigkeit für Infrarot-

Optiken), oder in verbesserten Abbildungseigenschaften. Auch höhere Öffnungsverhältnisse sind so leichter realisierbar.

**Patentansprüche**

1. Optische Anordnung von Linsen zur Erzeugung von drei Bildwinkeln, dadurch gekennzeichnet, daß sich vor einer Grundoptik mit festem Bildwinkel ein afokales optisches System z. B. vom Typ Galilei befindet, das sich relativ zur optischen Achse des Gesamtsystems in die Positionen 0˚, 90˚ und 180˚ drehen läßt und bei einem Übersetzungsverhältnis von $\sqrt{n}$ eine Bildwinkeländerung von n erzeugt (zwischen 0˚ und 180˚ Stellung).

Fig. 1

Bildebene

Basisoptik

Afokal-System

Position

Bildwinkel

$0°$

$\frac{1}{\sqrt{n}} * \alpha$

$90°$

$\alpha$

$180°$

$\sqrt{n} * \alpha$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 180 278   (GRENIER)<br>* Seite 1, Spalte 2, Zeilen 30-40; Seite 2, Spalte 1, Zeilen 1-33; Figuren 1,2 *<br>– – – | 1 | G 02 B 15/02 |
| A | DE-A-2 325 957   (OLYMPUS)<br>* Seite 8, Zeilen 2-6; Figuren 1,2 *<br>– – – – – | 1 | |

**RECHERCHIERTE SACHGEBIETE (Int. Cl.5)**

G 02 B

Der vorliegende Recherchenbericht wurde für alle Patentansprüche erstellt

| Recherchenort | Abschlußdatum der Recherche | Prüfer |
|---|---|---|
| Den Haag | 12 März 91 | SOULAIRE D.G.G. |